# EUROPÄISCHE PATENTANMELDUNG

(11) **EP 2 508 932 A1**
(43) Veröffentlichungstag der Anmeldung: **10.10.2012**
(21) Anmeldenummer: 12160271.8
(22) Anmeldetag: 20.03.2012
(51) Int. Cl.: G02B 27/00, G06K 7/10

(54) **Optoelektronischer Strichcodeleser und Objektiv dafür**

(30) Priorität: 07.04.2011 DE 102011001880
(71) Anmelder: Sick AG, 79183 Waldkirch (DE)
(72) Erfinder: Engler, Dr. Michael, 79350 Sexau (DE); Tschuch, Dr. Sebastian, 79104 Freiburg (DE)
(74) Vertreter: Hehl, Ulrich

(57) **Zusammenfassung**

Es wird ein optoelektronischer Strichcodeleser (10) angegeben, der einen ortsaufgelösten Lichtempfänger (12) mit einer Zeile oder einer Matrix von Empfangspixeln, ein dem Lichtempfänger (12) vorgeordnetes Objektiv (14) mit mindestens einer Linse (14a-c) sowie eine Auswertungseinheit (18) aufweist, die dafür ausgebildet ist, aus einem von dem Lichtempfänger (12) aufgenommenen Bild eines Strichcodes (16) eine Codeinformation auszulesen. Dabei sind Objektivparameter des Objektivs (14) für die scharfe Erfassung von eindimensionalen Strukturen, insbesondere Strichcodes (16), optimiert, wobei die Objektivparameter zu kleineren Abbildungsfehlern in meridionaler Ebene als in sagittaler Ebene führen.

## Beschreibung

Die Erfindung betrifft einen optoelektronischen Strichcodeleser mit einem Objektiv, das einem ortsaufgelösten Lichtempfänger vorgeordnet ist, ein entsprechendes Objektiv, ein Verfahren zum Lesen eines Strichcodes und ein Herstellungsverfahren für das Objektiv nach den Oberbegriffen von Anspruch 1, 12, 13 beziehungsweise 15.

Strichcodes oder Barcodes sind weitverbreitete Codierungen zur Identifizierung von Waren oder sonstigen Informationen, die einem Objekt zugeordnet werden sollen. Damit werden beispielsweise Preise festgestellt oder der Zielort einer Ware bestimmt. Daneben gibt es auch speziellere Anwendungen, etwa das Auslesen eines Strichcodes von einem Fahrzeug aus, wobei der Strichcode eine Positionsinformation enthält, an der sich das Fahrzeug orientiert. Anfänglich wurden Strichcodes mit Hilfe von Barcodescannern gelesen, und diese Geräte sind weiterhin sehr verbreitet. Allerdings werden zunehmend auch kamerabasierte Codeleser eingesetzt, in denen also mit Hilfe eines Bildsensors eine Aufnahme des Strichcodes erzeugt und diese anschließend digital ausgewertet wird.

Es gibt Anwendungen, in denen der Strichcode über eine größere Entfernung, unter veränderlichem Umgebungslicht oder anderen erheblichen Störeinflüssen gelesen werden soll. Damit steigen auch die Ansprüche an die Qualität der aufgenommenen Bilder, um die Codeinformation trotz der Störeinflüsse sicher zu erfassen. Dies führt dazu, dass Standardobjektive der kamerabasierten Codeleser nicht mehr ausreichen.

Objektive stellen die am meisten verbreiteten optischen Systeme dar und werden überall dort verwendet, wo ein Objekt auf ein Bild abgebildet werden muss. Es existiert eine Vielzahl von Objektiven für die unterschiedlichsten Anforderungen. Die allermeisten Objektive bestehen aus Kostengründen aus sphärischen Linsen und sind im allgemeinen rotationssymmetrisch. Dabei erfolgt die Auslegung des Objektivs üblicherweise so, dass auch die Abbildung rotationssymmetrisch ist.

Damit sind übliche Objektive nicht auf Problemstellungen optimiert, in denen das Objekt eindimensional in dem Sinne ist, dass die Objektinformation nur in einer Dimension variiert. Das ist bei einem Strichcode der Fall, da sich dessen Striche in Längsrichtung nicht verändern und die Codeinformation in der Breite der Striche und Strichabstände enthalten ist.

Es ist bekannt, eindimensionale Vorzugsrichtungen durch Verwendung nicht rotationssymmetrischer Linsen zu erreichen, beispielsweise zylindrischer oder entsprechend geformter asphärischer Linsen. Dabei ergeben sich aber Nachteile durch eine schlechtere Fehlertoleranz des Objektivs, höhere Kosten und eine komplexere Fertigung. Eine weitere Möglichkeit ist der Einsatz einer Schlitzblende anstelle einer rotationssymmetrischen Blende. Damit wird aber die Abbildung weniger lichtstark, weil eine Schlitzblende bei gleicher Breite eine deutlich geringere Fläche aufweist als beispielsweise eine kreisrunde Blende.

Außerdem hat eine fest vorgegebene eindimensionale Vorzugsrichtung den Nachteil, dass Objektiv und Barcode in einer festen Drehbeziehung zueinander angeordnet werden müssen. Ansonsten würden die aufzulösenden Strukturen nicht in der Vorzugsrichtung liegen, sondern quer dazu.

Weiterhin bekannt ist, dass Objektive stets Abbildungsfehler verursachen. Zu den bekannten Abbildungsfehlern zählen sphärische Aberration, Astigmatismus, Koma und chromatische Aberration. Eine wichtige Aufgabe des Objektivdesigns ist, diese Abbildungsfehler zu minimieren. Typischerweise wird dabei darauf geachtet, dass keiner der Abbildungsfehler überhand nimmt, somit das Objektiv auf möglichst kleine Abbildungsfehler in ihrer Gesamtheit optimiert. Für einen Strichcode sind aber gar nicht alle Abbildungsfehler in gleichem Maße relevant.

Aus der EP 1 028 344 A2 ist eine Vorrichtung zur Verringerung der sphärischen Aberration zur Aufnahme eindimensionaler optischer Strukturen bekannt. Dies wird insbesondere in einem Barcodeleser eingesetzt. Die Anpassung an die eindimensionale Struktur erfolgt mittels einer Schlitzblende und zieht damit die oben genannten Nachteile mit sich.

Die DE 195 81 524 B4 befasst sich mit einem kamerabasierten Barcodeleser. Dabei wird eine ganze Reihe von Abbildungsfehlern diskutiert, ohne dass Maßnahmen offenbart sind, um diese Abbildungsfehler in dem Objektiv zu reduzieren oder gar auszunutzen. Stattdessen werden Überlegungen angestellt, wie der Strichcode trotz der bekannten Mängel des Objektivs gelesen werden kann. Konkret genannt werden eine elliptische Blende, die Verwendung einer Zylinderlinse und eine spezielle Anpassung des Bildsensors mit langgestreckten anstelle quadratischer Pixel. Eine elliptische Blende entspricht effektiv einer Schlitzblende und wurde ebenso wie die Verwendung einer Zylinderlinse bereits oben diskutiert. Ein speziell angepasster Bildsensor führt zu ganz erheblichen Mehrkosten, muss ebenso wie die Schlitzblende und die Zylinderlinse in einer festen Drehbeziehung zu dem Strichcode stehen und löst dennoch das Problem nicht. Denn wenn das Objektiv bereits eine Abbildung auf dem Bildsensor erzeugt, die den Anforderungen nicht genügt, kann auch eine beliebig genaue oder angepasste Umwandlung in ein digitales Bildsignal die somit zerstörte Bildinformation nicht wiederherstellen.

Es ist daher Aufgabe der Erfindung, die Abbildung eines Strichcodes in einem gattungsgemäßen kamerabasierten Strichcodeleser zu verbessern.

Diese Aufgabe wird durch einen optoelektronischen Strichcodeleser mit einem ortsaufgelösten Lichtempfänger und einem dem Lichtempfänger vorgeordneten Objektiv sowie einem Verfahren zum Lesen eines Strichcodes nach Anspruch 1 beziehungsweise 13 gelöst. Sie wird weiterhin gelöst durch ein entsprechendes Objektiv gemäß Anspruch 12 und ein Herstellungsverfahren für das Objektiv gemäß Anspruch 15.

Dabei geht die Erfindung von dem Grundgedanken aus, Abbildungsfehler gezielt auszunutzen, um eine bessere Abbildungsqualität in der für das Lesen eines Strichcodes relevanten Richtung zu erreichen. Eine verschlechterte Abbildung hinsichtlich anderer Aspekte wird dabei in Kauf genommen. Das Objektiv ist auf besonders kleine Abbildungsfehler in meridionaler Richtung oder in anderen Worten eine möglichst geringe Spotgröße in radialer Richtung optimiert. Durch die kleinen Abbildungsfehler entsteht in dieser Richtung eine hohe Bildschärfe. Obwohl kein Optimierungsziel, geschieht dies fast zwangsläufig auf Kosten von größeren Abbildungsfehlern in sagittaler Richtung und führt damit zu einer verbreiterten Spotgröße in Umfangsrichtung. Damit wird die relevante Codeinformation, nämlich quer zu den Strichen des Strichcodes, besonders scharf erfasst, um den Preis, dass Bildinformation längs der Striche verloren geht, die aber für die Codeerfassung nicht relevant ist. Demnach wird nicht wie herkömmlich versucht, die Gesamtheit der Abbildungsfehler klein zu halten. Die Optimierung vernachlässigt die sagittale Richtung. Auch andere Abbildungsfehler können sich erhöhen. Beispielsweise kann, wenn monochromatisch beleuchtet wird, was zum Codelesen oftmals ausreicht, der Optikentwurf des Objektivs chromatische Fehler außer Acht lassen.

Vorzugsweise werden die in meridionaler Ebene kleineren Abbildungsfehler als in sagittaler Ebene über alle Öffnungswinkel und Objektabstände erreicht, also für jeden Strahl, der den Lichtempfänger erreichen kann und somit das gesamte Gesichtsfeld des Sensors. Diese Bedingung kann aber auch eingeschränkt werden, beispielsweise nur auf Öffnungswinkel oder Objektabstände, die einem Arbeitsbereich entsprechen.

Die Erfindung hat den Vorteil, dass eine deutlich verbesserte Erfassung von Strichcodes beziehungsweise etwas allgemeiner von eindimensionalen Strukturen oder Objekten ermöglicht wird. Die Eigenschaften des Objektivs sind gezielt nur in meridionaler Richtung zu Ungunsten der Eigenschaften in sagittaler Richtung verbessert. Die Schärfe in der zur Codeerfassung relevanten Richtung ist damit verbessert, während sie sich in der irrelevanten Richtung längs der Striche verschlechtern darf. Dabei bleibt der übliche Objektivaufbau erhalten. Dazu sind weder komplexe Linsen noch lichtschwächere Blenden erforderlich.

Die Auswertungseinheit ist bevorzugt dafür ausgebildet, zum Auslesen der Codeinformation in dem Bild Hell-Dunkel-Übergänge auf einer Linie quer, insbesondere senkrecht zu den Strichen des Strichcodes auszuwerten. Die relevante Codeinformation liegt in den Strichbreiten und den Abständen der Striche. Eine Linie, die zumindest einen gewissen Winkel zu der Längsrichtung der Striche aufweist, enthält somit die gesamte Codeinformation. Je stärker diese Linie sich der Senkrechten zu der Längsrichtung annähert, umso stärker profitiert die Auswertung von dem verbesserten Objektiv. Bei senkrechter Orientierung fällt die verbesserte Richtung in meridionaler Ebene genau mit den Hell-Dunkel-Übergängen zusammen, während die geringere Schärfe in sagittaler Richtung überhaupt keine Rolle spielt, weil dort ohnehin nur einheitliche schwarze oder weiße Bereiche der Striche liegen.

Das Objektiv ist bevorzugt rotationssymmetrisch. Das ist ein wesentlicher Vorteil gegenüber den einleitend genannten Lösungen mit Schlitzblende oder Zylinderoptiken, deren Vorzugsrichtung gegenüber dem zu lesenden Strichcode ausgerichtet werden muss. Auf den ersten Blick scheint sich bei rotationssymmetrischer Abbildung die Lesbarkeit einer eindimensionalen Struktur gar nicht zu verbessern, denn es gibt ebenso viele Bereiche, in denen die aufzulösende eindimensionale Struktur den kleineren Abbildungsfehlern in meridionaler Richtung unterliegt wie den größeren Abbildungsfehlern in sagittaler Richtung. Indem aber die Codeauswertung quer zu der Längsrichtung der Striche erfolgt, werden davon gerade diejenigen Bereiche ausgewählt, in denen der Effekt vorteilhaft wirkt. Betrachtet man beispielsweise eine Linie, die der Längsrichtung des Codes folgt, so ist die Schärfe gerade in Längsrichtung verbessert und in Querrichtung verschlechtert, die eindimensionale Struktur also besonders schlecht aufgelöst. Das spielt aber erfindungsgemäß keine Rolle, weil in dieser Richtung ohnehin kein Code ausgewertet werden könnte.

Das Objektiv weist bevorzugt mehrere sphärische Linsen auf. Das ist wegen der soeben beschriebenen Effekte ohne Verlust der Abbildungsqualität möglich. Sphärische Linsen sind deutlich einfacher herzustellen und daher kostengünstiger. Um genügend Spielraum für das Objektdesign anzubieten, werden mehrere derartige Linsen hintereinander angeordnet, beispielsweise zwei bis fünf oder im Einzelfall auch noch mehr Linsen.

Vorzugsweise ist mindestens eine Linse des Objektivs asphärisch. Auch diese asphärische Linse ist bevorzugt rotationssymmetrisch zur Drehachse. Eine asphärische Linse bietet mehr Freiheitsgrade für die Optimierung als eine sphärische Linse, beispielsweise durch eine Freiformfläche. Somit kann eine asphärische Linse mehrere sphärische Linsen des Objektivs ersetzen, so dass im Extremfall das Objektiv insgesamt nur aus einer asphärischen Linse besteht. Hier muss ein Kompromiss zwischen den Herstellungskosten für die aufwändigere Form einer asphärischen Linse gegenüber der größeren notwendigen Anzahl an sphärischen Linsen und deren höherem Platzbedarf gefunden werden.

Die Objektivparameter sind bevorzugt einer oder mehrere der Folgenden: Anzahl von Linsen, Abstände der Linsen zueinander, Krümmungsradien der Linsen, Dicken der Linsen und Materialien der Linsen. Diese Objektivparameter können beim Entwurf des Objektivs teilweise vorab festgelegt werden, etwa eine Anzahl von Linsen, und werden ansonsten angepasst, um die gewünschten Abbildungseigenschaften in meridionaler und sagittaler Richtung zu liefern. Als Material für die Linsen sind insbesondere verschiedene Gläser vorgesehen, weil Kunststoffe die geforderten hohen optischen Anforderungen häufig nicht erfüllen.

Das Objektiv weist bevorzugt eine Kreisblende auf. Wegen der durch gezielte Ausnutzung von Abbildungsfehlern erreichten Anpassung an eindimensionale Strukturen ist eine Schlitzblende mit ihrer geringeren Lichtstärke nicht mehr notwendig.

Dabei umfassen die Objektivparameter bevorzugt zusätzlich einen Blendenabstand und eine Blendengröße. Die Blende liefert weitere Freiheitsgrade für das Objektiv in Form des Abstands zu der nächsten Linse und der Fläche der Öffnung, die bei einer Kreisblende allein durch den Radius bestimmt ist.

Als Optimierungskriterium der Objektivparameter ist bevorzugt für eine vorgegebene Maximalanzahl aufzulösender Linienpaare pro Strecke verlangt, dass die Modulationsübertragungsfunktion in der meridionalen Ebene größer ist als der maximale Kontrast. Damit ist die geforderte Abbildungsqualität für die eindimensionale Struktur in einer einfach und automatisch prüfbaren Bedingung formuliert. Bei der genannten Anforderung an die Modulationsübertragungsfunktion ist sichergestellt, dass Strichcodes einer bestimmten abgebildeten Größe noch sicher decodiert werden. Das Optimierungskriterium sollte dabei vorzugsweise über alle Öffnungswinkel und/oder alle Abstände erfüllt sein, jedenfalls über den gewünschten Arbeitsbereich des Strichcodelesers.

Als Optimierungskriterium der Objektivparameter ist bevorzugt verlangt, dass die Spotgröße in der meridionalen Ebene über alle Öffnungswinkel kleiner als eine Vorgabe ist. Das ist ein weiteres automatisch überprüfbares Maß, ob die Anpassung an die Abbildung eindimensionaler Strukturen hinreichend ist.

Das Objektiv ist bevorzugt nach Objektivparametern aufgebaut, die in einem Simulationsprogramm aufgefunden sind, in dem Objektivparameter teilweise vorbesetzt und teilweise als Optimierungsvariable bestimmt sind und das automatisch die Optimierungsvariablen variiert, bis ein Optimierungskriterium erfüllt ist. Es ist somit zur Umsetzung der Erfindung zunächst nicht erforderlich, die erforderlichen Objektivparameter konstruktiv anzugeben. Das ist wegen der Vielzahl von denkbaren Anwendungen und deren speziellen Anforderungen auch gar nicht möglich. Nach Vorgabe derjenigen Größen, deren Veränderung erlaubt ist, und andererseits Festlegung von gegebenen Randbedingungen werden die Objektivparameter durch ein Simulationsprogramm automatisch aufgefunden. Die Verwirklichung der Erfindung erfordert somit keine Überlegungen mehr, die über die dem Fachmann geläufige Bedienung eines Simulationsprogramms hinausgehen. Die Erfindung gibt dabei das Optimierungsziel einschließlich konkreter Optimierungskriterien im Sinne der oben genannten Merkmale vor, insbesondere kleiner Abbildungsfehler in meridionaler Richtung.

Das erfindungsgemäße Objektiv kann sämtliche Merkmale und Kombinationen von Merkmalen aufweisen, wie sie für das Objektiv des Strichcodelesers beschrieben sind. Das erfindungsgemäße Verfahren zum Lesen eines Strichcodes kann auf ähnliche Weise weitergebildet werden und zeigt dabei ähnliche Vorteile. Auch das erfindungsgemäße Herstellungsverfahren kann weitergebildet werden, um weitere Eigenschaften des Objektivs zu erzielen. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung einer Ausführungsform eines erfindungsgemäßen Strichcodelesers;
- Fig. 2: eine beispielhafte Darstellung eines Strichcodes zur Erläuterung von Abbildungsfehlern, die erfindungsgemäß zur verbesserten Schärfe der relevanten Codestrukturen führen;
- Fig. 3: eine dreidimensionale Skizze zur Erläuterung der elliptischen Brennpunktablage durch Astigmatismus;
- Fig. 4: Spotdiagramme zur allgemeinen Illustration der Auswirkung von Abbildungsfehlern auf die Spotform und Spotgröße;
- Fig. 5: Spotdiagramme zur Illustration der Auswirkung von Astigmatismus auf die Spotform und Spotgröße;
- Fig. 6: Spotdiagramme zur Illustration der Auswirkung von Koma auf die Spotform und Spotgröße; und
- Fig. 7: ein rein beispielhaftes ausoptimiertes Design für ein erfindungsgemäßes Objektiv mit unterschiedlicher Schärfe in meridionaler und sagittaler Richtung.

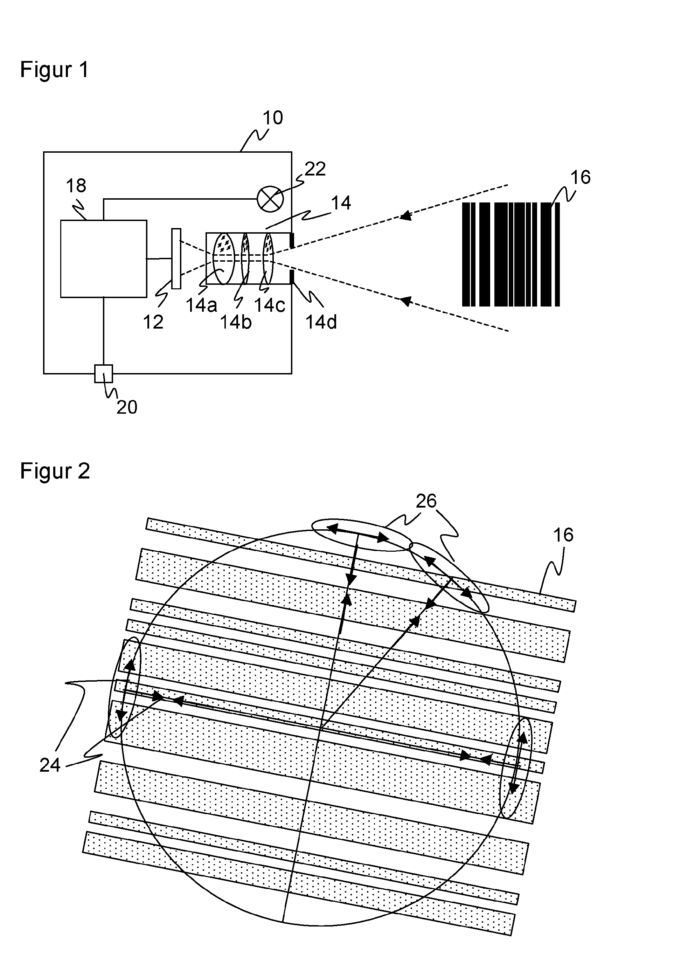

Figur 1 zeigt in einer schematischen Schnittdarstellung einen erfindungsgemäßen kamerabasierten Strichcodeleser 10. Ein Lichtempfänger 12 weist eine Vielzahl von Empfangspixeln auf, die eine Zeile oder eine zweidimensionale Matrix bilden. Derartige Lichtempfänger 12 sind beispielsweise als Bildsensoren in CCD- oder CMSO-Technologie verfügbar. Ein Objektiv 14 ist dem Lichtempfänger 12 vorgeordnet und umfasst mehrere Linsen 14a-c sowie eine Blende 14d. Durch das Objektiv 14 nimmt der Lichtempfänger 12 ein Bild eines zu lesenden Strichcodes 16 auf und wandelt die Bildinformation in elektrische Bildsignale um.

Eine Auswertungseinheit 18, beispielsweise ein Mikrocontroller, ein FPGA oder ein sonstiger digitaler Baustein, ist mit dem Lichtempfänger 12 verbunden und decodiert aus den elektrischen Bildsignalen die Codeinformation des Strichcodes 16. Die Codeinformation wird dann beispielsweise an einem Ausgang 20 bereitgestellt oder angezeigt. Der Strichcodeleser 10 verfügt außerdem über eine optionale Beleuchtung 22, um den Erfassungsbereich für Strichcodes 16 auszuleuchten.

Das Objektiv 14 ist erfindungsgemäß in besonderer Weise für das Abbilden eindimensionaler Strukturen ausgelegt, wie der Strich des Strichcodes 16. Figur 2 zeigt zunächst den Effekt des Objektivs 14 anhand des beispielhaft dargestellten Strichcodes 16. Aufgrund von gezielter Optimierung sind Abbildungsfehler in meridionaler Ebene besonders klein. Da Abbildungsfehler nicht einfach unterdrückt werden können, wird zum Ausgleich in Kauf genommen, dass sich Abbildungsfehler in sagittaler Ebene vergrößern.

Die meridionale Ebene ist als diejenige Ebene definiert, die den Hauptstrahl des betrachteten Lichtbündels und die optische Achse des Objektivs 14 enthält. Die sagittale Ebene ist diejenige dazu senkrecht stehende Ebene, die ebenfalls den Hauptstrahl enthält. Wenn in dieser Beschreibung von meridionaler oder sagittaler Richtung gesprochen wird, so ist damit jeweils die Richtung innerhalb der angesprochenen Ebene und senkrecht zu dem beiden Ebenen gemeinsamen Hauptstrahl gemeint.

Die in meridionaler und sagittaler Richtung unterschiedlichen Abbildungsfehler werden in Figur 2 durch Pfeile 24 und durch beispielhafte Spots 26 angedeutet. Der abgebildete Strichcode steht zumindest näherungsweise senkrecht zur optischen Achse des Objektivs 14. Damit verläuft die meridionale Richtung in Umfangsrichtung, die sagittale Richtung in radialer Richtung. Wie durch die Pfeile 24 und Spots 26 erkennbar, entsteht aufgrund der Bevorzugung der meridionalen Richtung bei der Verteilung der Abbildungsfehler ein Spot, der in meridionaler Richtung kleiner ist als in sagittaler Richtung. Anders ausgedrückt ist die Schärfe in radialer Richtung größer als in Umfangsrichtung.

Das Objektiv 14 ist trotz der Anpassung an die eindimensionale Struktur des Strichcodes 16 rotationssymmetrisch. Somit profitieren nicht alle Bereiche des Strichcodes 16 von dem optimierten Objektiv 14. Es kommt aber für die Lesbarkeit des Strichcodes 16 nicht darauf an, dass beispielsweise der annähernd waagerechte zentrale Strich in Figur 2 in seinen Randbereichen sogar mit erhöhten Abbildungsfehlern aufgenommen wird und dadurch die Strichbreite noch verwaschen wird. Das Lesen des Strichcodes 16 erfolgt nämlich stets quer zum Code, weil nur in dieser Richtung sämtliche die Codeinformation enthaltenden Hell-Dunkel-Übergänge liegen. Besonders in senkrechter Richtung wirken die geringeren Abbildungsfehler ausschließlich in der relevanten Richtung, in der Strichdicke und Strichzwischenräume aufgenommen werden, und die erhöhten Abbildungsfehler ausschließlich in der irrelevanten Richtung längs der Striche. Diese vorteilhafte Auswertungsrichtung wird entweder im Falle einer Pixelzeile als Lichtempfänger 12 durch Ausrichten des Strichcodelesers 10 beziehungsweise des Strichcodes 16 oder durch digitale Bildbearbeitung in der Auswertungseinheit 18 erreicht, bei der eine günstige Linie quer zum Code gesucht wird.

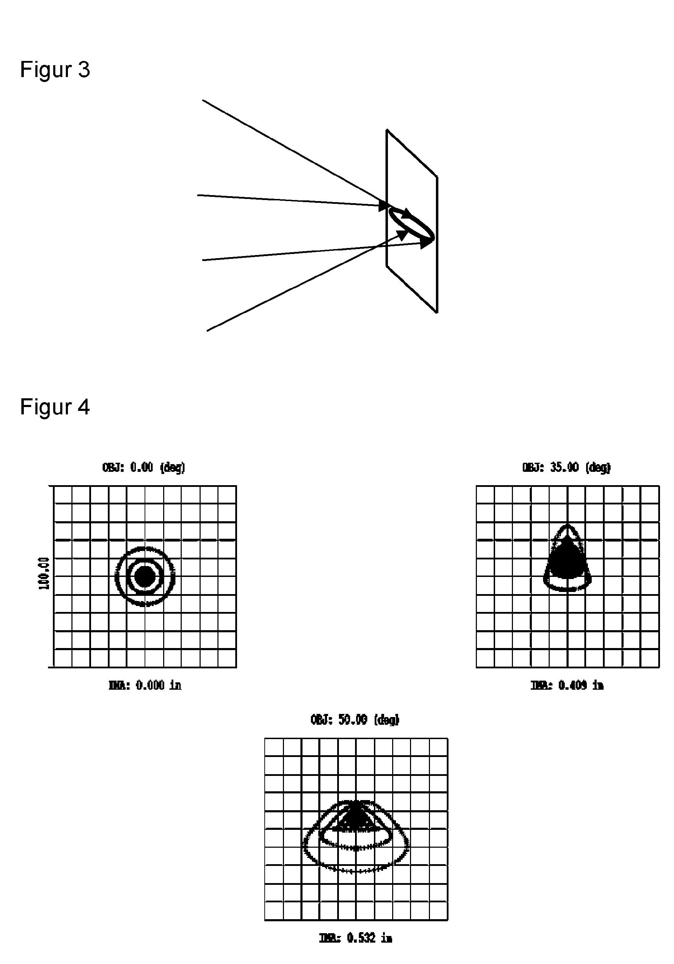

Die genannten Eigenschaften des Objektivs 14 werden durch gezielte Manipulation der Abbildungsfehler erzielt. Figur 3 zeigt beispielhaft in einer dreidimensionalen Skizze eine räumliche Ausdehnung der Brennpunktablage, die in der einen Richtung deutlich kleiner ist als in der anderen Richtung. Dies kann insbesondere auf die eher am Rand befindlichen Strahlen angewandt werden.

Figur 4 illustriert beispielhaft die Schärfe eines Objektivs am Brennpunkt durch Spotdiagramme. Dabei entsprechen größere Spots einer geringeren Bildschärfe als kleinere Spots. Sind Spots nicht kreisförmig, wie rechts und unten in Figur 4, so ist die Schärfe in meridionaler und sagittaler Richtung unterschiedlich.

Derartige Abbildungsfehler werden nun für das Objektiv 14 optimiert. Besonders geeignet sind für die gewünschte Vorzugsrichtung der Abbildungsfehler Astigmatismus und Koma.

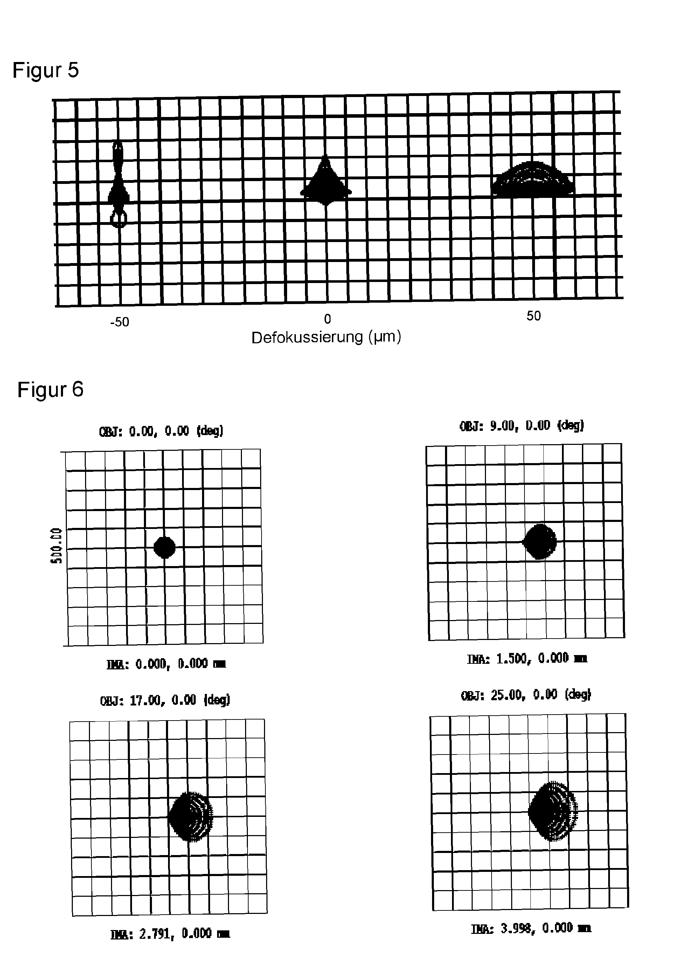

Astigmatismus erfüllt per se die Eigenschaft elliptischer Brennpunktablage. Figur 5 zeigt drei Spotdiagramme eines astigmatischen Objektivs mit einer Ablage des Spots in verschiedenen Abständen. Der mittlere Spot liegt in der Brennebene, der linke und rechte Spot etwas davor beziehungsweise dahinter. Wird nun die Brennebene des Objektivs nicht auf den Brennpunkt gelegt, sondern etwas davor oder dahinter, so erhält man eine Verbesserung in sagittaler beziehungsweise meridionaler Richtung und eine Verschlechterung in der jeweils anderen Richtung.

Ähnlich lässt sich auch Koma ausnutzen, vor allem für randständige Strahlen. Figur 6 zeigt weitere Spotdiagramme, bei denen eine eindimensionale Optimierung mittels Koma erzeugt wurde. Die Brennpunktablage wird in einer Richtung durch den Bildfehler Koma verdichtet, wodurch sich ebenfalls eine unterschiedliche Schärfe in sagittaler und meridionaler Richtung ergibt.

Die konkrete Festlegung der Objektivparameter erfolgt in der Praxis mit Hilfe von Optiksimulationsprogrammen. Dabei können Werte wie Astigmatismus und Koma definiert bestimmt und im Ergebnis ein Objektiv 14 spezifiziert werden, welches die gewünschte Eigenschaft besonders großer Schärfe in der für die eindimensionale Struktur relevanten Richtung zeigt.

Ausgangspunkt ist ein Objektiv, welches grob den Anforderungen beispielsweise an Brennweite, Apertur, Abmessungen, Öffnungswinkel und Tiefenschärfe entspricht, jedoch noch nicht auf die erfindungsgemäße eindimensionale Schärfe optimiert ist, also die Vorzugsrichtung der Abbildungsfehler.

Dann werden die Optimierungsvariablen bestimmt. Dazu zählen insbesondere die Anzahl der Linsen 14a-c, die Abstände der Linsen 14a-c zueinander, die Krümmungsradien der Linsen 14a-c, die Dicken der Linsen 14a-c und deren Materialien. Vorzugsweise werden dabei nur sphärische Linsen 14a-c verwendet. Es ist aber auch möglich, mehrere sphärische Linsen 14a-c durch eine oder mehrere asphärische Linsen 14a-c zu ersetzen. Weitere Optimierungsvariablen sind der Abstand der Blende 14d sowie deren Form. Da ein rotationssymmetrisches Objektiv 14 und damit eine kreisförmige Blende 14d bevorzugt ist, reduziert sich der Freiheitsgrad der Blendenform auf deren Radius. Die Optimierungsvariablen können teilweise fixiert vorgegeben oder mit plausiblen Anfangswerten vorbesetzt werden. Festgelegt werden außerdem die unveränderbaren Randbedingungen, wie der Arbeitsbereich des Objektivs 14.

Dem Simulationsprogramm wird dann weiterhin ein Optimierungsziel vorgegeben. Dabei kann es sich um eine höchste Spotgröße in der gewünschten Vorzugsrichtung handeln, wobei der Spot in der Vorzugsrichtung möglichst gar keine Ausdehnung haben soll. Ein alternatives oder weiteres Optimierungsziel wird auf Basis der sogenannten Frequenz festgelegt, die in diesem Zusammenhang als die Anzahl der aufzulösenden Linienpaare je Strecke definiert ist. Die Anforderung für Optimierung besteht dann darin, dass die Modulationsübertragungsfunktion (MTF, Modulation Transfer Function) über alle Öffnungswinkel und Abstände des gewünschten Arbeitsbereichs größer sein muss als der maximale Kontrast. Beispielhafte Zahlenwerte sind 20 Linienpaare/mm und ein maximaler Kontrast von 30%.

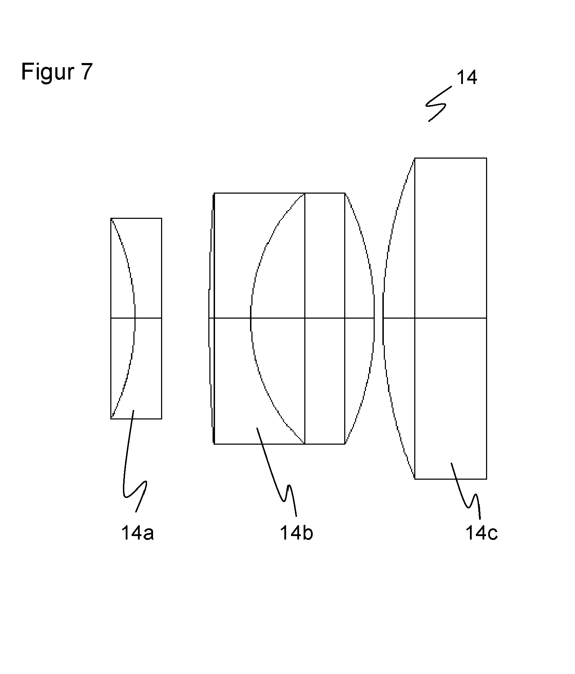

Mit diesen Vorgaben wird dann in dem Simulationsprogramm automatisch nach geeigneten Werten für die Optimierungsvariablen gesucht. Figur 7 zeigt ein Beispielergebnis für ein ausoptimiertes Design mit unterschiedlicher Schärfe in sagittaler und meridionaler Richtung für die im letzten Absatz genannten Zahlenwerte. Das Objektiv besteht in diesem Beispiel aus drei Linsen 14a-c, davon ein Achromat.

## Patentansprüche

1. Optoelektronischer Strichcodeleser (10), der einen ortsaufgelösten Lichtempfänger (12) mit einer Zeile oder einer Matrix von Empfangspixeln, ein dem Lichtempfänger (12) vorgeordnetes Objektiv (14) mit mindestens einer Linse (14a-c) sowie eine Auswertungseinheit (18) aufweist, die dafür ausgebildet ist, aus einem von dem Lichtempfänger (12) aufgenommenen Bild eines Strichcodes (16) eine Codeinformation auszulesen,
**dadurch gekennzeichnet,**
**dass** Objektivparameter des Objektivs (14) für die scharfe Erfassung von eindimensionalen Strukturen, insbesondere Strichcodes (16), optimiert sind, wobei die Objektivparameter zu kleineren Abbildungsfehlern in meridionaler Ebene als in sagittaler Ebene führen.

2. Strichcodeleser (10) nach Anspruch 1,
wobei die Auswertungseinheit (18) dafür ausgebildet ist, zum Auslesen der Codeinformation in dem Bild Hell-Dunkel-Übergänge auf einer Linie quer, insbesondere senkrecht zu den Strichen des Strichcodes (16) auszuwerten.

3. Strichcodeleser (10) nach Anspruch 1 oder 2,
wobei das Objektiv (18) rotationssymmetrisch ist.

4. Strichcodeleser (10) nach einem der vorhergehenden Ansprüche,
wobei das Objektiv (14) mehrere sphärische Linsen (14a-c) aufweist.

5. Strichcodeleser (10) nach einem der vorhergehenden Ansprüche,
wobei mindestens eine Linse (14a-c) des Objektivs (14) asphärisch ist.

6. Strichcodeleser (10) nach einem der vorhergehenden Ansprüche,
wobei die Objektivparameter einer oder mehrere der Folgenden sind: Anzahl von Linsen (14a-c), Abstände der Linsen (14a-c) zueinander, Krümmungsradien der Linsen (14a-c), Dicken der Linsen (14a-c) und Materialien, insbesondere Gläser der Linsen (14a-c).

7. Strichcodeleser (10) nach einem der vorhergehenden Ansprüche,
wobei das Objektiv (14) eine Kreisblende (14d) aufweist.

8. Strichcodeleser (10) nach einem der vorhergehenden Ansprüche,
wobei die Objektivparameter zusätzlich einen Blendenabstand und eine Blendengröße umfassen.

9. Strichcodeleser (10) nach einem der vorhergehenden Ansprüche,
wobei als Optimierungskriterium der Objektivparameter für eine vorgegebene Maximalanzahl aufzulösender Linienpaare pro Strecke verlangt ist, dass die Modulationsübertragungsfunktion in der meridionalen Ebene größer ist als der maximale Kontrast.

10. Strichcodeleser (10) nach einem der vorhergehenden Ansprüche,
wobei als Optimierungskriterium der Objektivparameter verlangt ist, dass die Spotgröße in der meridionalen Ebene über alle Öffnungswinkel kleiner als eine Vorgabe ist.

11. Strichcodeleser (10) nach einem der vorhergehenden Ansprüche,
wobei das Objektiv (14) nach Objektivparametern aufgebaut ist, die in einem Simulationsprogramm aufgefunden sind, in dem Objektivparameter teilweise vorbesetzt und teilweise als Optimierungsvariable bestimmt sind und das automatisch die Optimierungsvariablen variiert, bis ein Optimierungskriterium erfüllt ist.

12. Objektiv (14) für einen optoelektronischen Strichcodeleser (10), das mindestens eine Linse (14a-c) aufweist,
**dadurch gekennzeichnet,**
**dass** Objektivparameter des Objektivs (14) für die scharfe Erfassung von eindimensionalen Strukturen, insbesondere Strichcodes (16), optimiert sind, wobei die Objektivparameter zu kleineren Abbildungsfehlern in meridionaler Ebene als in sagittaler Ebene führen.

13. Verfahren zum Lesen eines Strichcodes (16), bei dem mit einem ortsaufgelösten Lichtempfänger (12) mit einer Zeile oder einer Matrix von Empfangspixeln ein Bild des Strichcodes (16) durch ein Objektiv (14) mit mindestens einer Linse (14a-c) aufgenommen wird, wobei das Bild anschließend ausgewertet wird, um eine Codeinformation auszulesen,
**dadurch gekennzeichnet,**
**dass** der Strichcode (16) von dem Objektiv (14) mit Objektivparametern auf dem Lichtempfänger (12) abgebildet wird, die für eine scharfe Erfassung von eindimensionalen Strukturen, insbesondere Strichen des Strichcodes (16) optimiert sind, wobei die Objektivparameter zu kleineren Abbildungsfehlern in meridionaler Ebene als in sagittaler Ebene führen.

14. Verfahren nach Anspruch 13,
wobei die Zeile des Lichtempfängers (12) quer, insbesondere senkrecht zu den Strichen des Strichcodes (16) ausgerichtet wird, oder wobei der Auswertung eine Linie quer, insbesondere senkrecht zu dem Strichcode (16) zugrunde gelegt wird.

15. Verfahren zur Herstellung eines Objektivs (14) mit mindestens einer Linse (14a-c), bei dem in einem Simulationsprogramm Objektivparameter teilweise vorbesetzt und teilweise als Optimierungsvariablen bestimmt werden und bei dem ein Optimierungskriterium vorgegeben wird, wobei das Simulationsprogramm dann automatisch die Optimierungsvariablen variiert, bis das Optimierungskriterium erfüllt ist, wobei die Objektivparameter eine oder mehrere der Folgenden sind: Anzahl von Linsen (14a-c), Abstände der Linsen (14a-c) zueinander, Krümmungsradien der Linsen (14a-c), Dicken der Linsen (14a-c) und Materialien, insbesondere Gläser der Linsen (14a-c), Blendenabstand oder Blendengröße,
**dadurch gekennzeichnet,**
**dass** das Objektiv (14) für die scharfe Erfassung von eindimensionalen Strukturen, insbesondere Strichcodes (16) optimiert wird, so dass die Objektivparameter zu kleineren Abbildungsfehlern in meridionaler Ebene als in sagittaler Ebene führen, wobei insbesondere als Optimierungskriterium der Objektivparameter für eine vorgegebene Maximalanzahl aufzulösender Linienpaare pro Strecke verlangt ist, dass die Modulationsübertragungsfunktion über alle Öffnungswinkel in der meridionalen Ebene größer ist als der maximale Kontrast oder dass die Spotgröße in der meridionalen Ebene über alle Öffnungswinkel kleiner als eine Vorgabe ist.
